# FASCICULE DE BREVET EUROPEEN

(11) **EP 0 323 949 B1**
(45) Date de publication et mention de la délivrance du brevet: **28.07.1993**
(21) Numéro de dépôt: 89870002.6
(22) Date de dépôt: 04.01.1989
(51) Int. Cl.: B23D 1/26, B23Q 35/10

(54) **Dispositif pour rectifier en continu les bords de rive de feuilles métalliques en mouvement**
Vorrichtung zur Kantenbearbeitung von laufenden Blechen
Device for continuously trimming the edges of moving metallic sheets

(30) Priorité: 06.01.1988 BE 8800004
(43) Date de publication de la demande: 12.07.1989
(73) Titulaire: COCKERILL SAMBRE Société Anonyme dite:, B-4100 Liege (Seraing) (BE)
(72) Inventeur: Sandretti, Pino, B-4131 Flemalle (BE); Pelerin, Jacques, B-4040 Tilff (BE); Minne, Claude, B-1460 Ittre (BE); Pietteur, Jacques, B-4950 Beaufays (BE)
(74) Mandataire: Van Malderen, Michel

(56) Documents cités:
- DE-A- 2 158 191
- DE-A- 2 457 565
- FR-A- 1 365 153
- US-A- 2 242 815

## Description

La présente invention est relative à un dispositif pour rectifier en continu les bords de rives de feuilles métalliques en bande en mouvement.

### Inconvénients des solutions de l'état de la technique

On sait que les bandes de feuilles métalliques laminées présentent des irrégularités sur les bords de rives, souvent dénommées dents de scie des bords, qui sont essentiellement dues aux bavures de cisaillage des rives après décapage et qui sont amplifiées par le laminage.

Les irrégularités sont d'autant plus marquées que le laminage est poussé et que les épaisseurs de feuille sont faibles.

En plus de irrégularités dans le sens transversal de la bande de feuille métallique, celle-ci présente souvent des bavures dans le plan perpendiculaire au plan principal de la bande et principalement dans les bandes cisaillées à la volée.

Il en résulte une usure prématurée de revêtement des rouleaux d'entraînement et de support de la bande de feuille métallique par suite d'un effort de cisaillement exercé dans la masse dudit revêtement qui est souvent, dans le cas de lignes de prélaquage, en caoutchouc ou en polyuréthane de faible dureté.

Cette usure prématurée est amplifiée par l'étalement des vitesses relatives entre rouleaux et bandes.

Notamment dans le cas de feuilles métalliques revêtues, l'épaisseur du revêtement varie de ce fait sur la largeur de ladite feuille métallique.

On obtient par conséquent un produit non homogène et/ou un produit présentant des défauts dans le revêtement, à savoir des traînées parasites ou des surépaisseurs sur rives.

On connaît par le document FR-A-1.365.153 (W. SCHMIDT) un dispositif pour polir ou profiler des arêtes de panneaux de verre et de glaces. Dans ce dispositif il est prévu que les meules, c'est-à-dire les organes de polissage sont montées dur des bras oscillants doubles. Les meules sont appliquées sur les pièces à traiter par un contrepoids et/ou un ressort de pression.

Ce document qui concerne un domaine technique totalement différent de celui auquel s'adresse la présente invention ne permet pas de résoudre les inconvénients précités.

### Buts visés par l'invention

La présente invention vise à rémédier aux divers inconvénients susmentionnés.

Un but spécifique de la présente invention consiste à fournir un dispositif qui permet de rectifier en continu les bords de rive de feuilles métalliques en bande.

Un autre but spécifique de la présente invention consiste à fournir un dispositif du type susmentionné qui est stable en fonction de la vitesse de défilement de la bande de feuille métallique.

### Eléments caractéristiques de l'invention

Selon la présente invention, le dispositif de type susmentionné comporte un support fixe monté sur un châssis réglable en hauteur et un support mobile agencé de manière à pouvoir coulisser sur ledit support fixe selon une direction essentiellement perpendiculaire à la direction de défilement de la bande de feuille métallique. Le support mobile comporte un bras pivotant en son centre sur un axe essentiellement vertical et comportant aux deux extrémités chaque fois un galet de guidage qui prend appui sur un même bord de rive d'une bande de feuille métallique, un galet de dressage inférieur et un galet de dressage supérieur entre lesquels est serrée et dressée la bande de feuille métallique moyennant une force de pression réglable, un porte-outil amont qui porte au moins un outil de coupe pour le dressage de la tranche de la bande de feuille métallique et un porte-outil aval qui porte au moins un outil de chanfreinage des arêtes supérieure et inférieure, le support mobile étant appliqué contre le bord de rive de la bande de feuille métallique, via les galets de guidage, moyennant une force de pression réglable qui prend appui sur le support fixe.

On a constaté lors d'essais que le guidage des outils sur les bords de rive à l'aide de galets de guidage montés sur les deux extrémités d'un bras pivotable en son centre est particulièrement avantageux et approprié pour assurer un contact permanent entre les outils et les bords de rive.

Avantageusement, le bras pivotable présente une dimension telle que les galets de guidage se trouvent respectivement en amont et en aval des porte-outils correspondants, de telle sorte qu'un galet de guidage prend appui sur un bord de rive brut et l'autre galet de guidage prend appui sur un bord de rive rectifié. De cette manière, on obtient une stabilisation adéquate en fonction de la vitesse de défilement de la bande.

De préférence, la force de pression réglable qui applique le support mobile via les galets de guidage contre le bord de rive comporte une composante active et une composante passive. Selon une forme d'exécution particulièrement préférée de la présent invention, la composante active consiste en un vérin à pression réglable et la composante passive consiste en un ressort. On a constaté que la combinaison de ces deux moyens procure des résultats avantageux, notamment en ce qui concerne la sensibilité aux vibrations, plus particulièrement à vitesse élevée.

D'autres détails apparaîtront plus clairement à la lecture de la description qui suit, donnée à l'appui des dessins annexés dans lesquels:

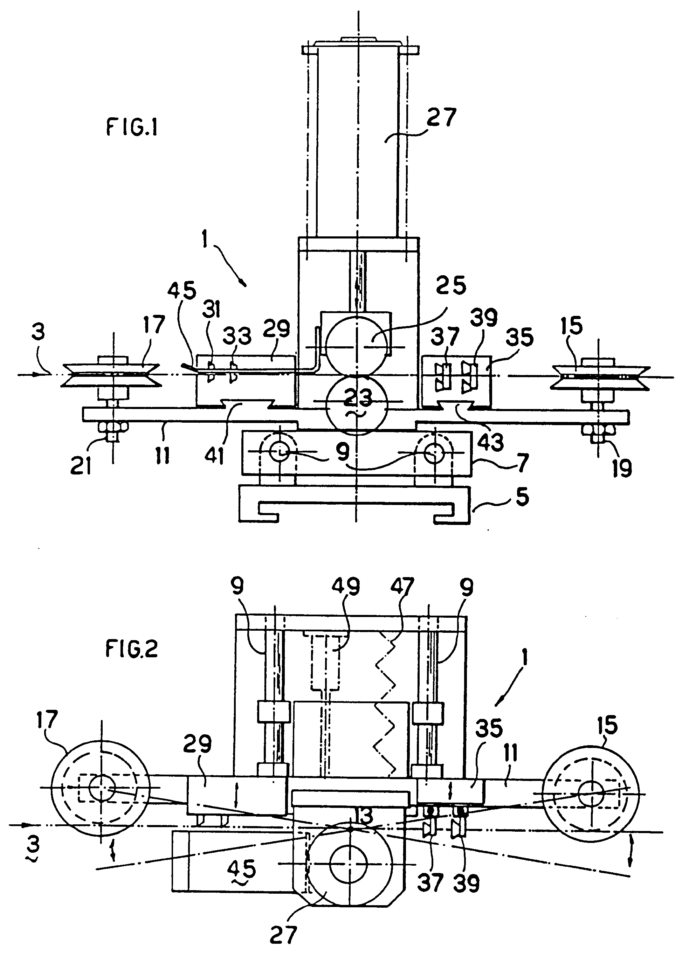

- la figure 1 représente une vue schématique de face du dispositif conforme à la présente invention, et
- la figure 2 est une vue schématique en plan de dispositif représenté à la figure 1.

En référence aux figures, des repères de référence identiques se rapportent à des éléments identiques ou analogues.

Le dispositif 1 conforme à la présente invention destiné à rectifier les bords de rive en bandes de feuille métallique 3 comporte un support fixe 5 monté sur un châssis réglable en hauteur (non représenté), et un support mobile 7 qui peut coulisser sur des guides 9 solidaires du support fixe 5.

Le support mobile 7 comporte un bras 11 monté de manière à pouvoir pivoter sur un axe essentiellement vertical 13 en son centre et muni, à ses deux extrémités, d'un galet de guidage 15 et 17. Lesdits galets de guidage sont avantageusement réglables en hauteur moyennant une tige filetée, respectivement 19 et 21.

Ledit bras pivotant 11 comporte en outre un galet de dressage inférieur 23 de la feuille métallique, dont l'axe de rotation est fixe et un galet de dressage supérieur 25. Avantageusement, ledit galet de dressage supérieur peut être écarté dudit galet de dressage inférieur à l'aide d'un vérin 27. Ceci facilite le passage d'une couture ou d'un agrafage de deux bandes de feuille métallique dans le processus de traitement continu.

Selon l'invention, le galet de dressage supérieur 25 serre, avec une force de pression, de préférence réglable, la feuille métallique 3 défilant à grande vitesse contre le galet de dressage inférieur 23 en vue de la dresser à l'endroit de l'usinage à effectuer sur les bords de rive. Ladite force de pression est exercée à l'aide du vérin 27 également.

On a constaté que l'on obtient les meilleurs résultats à l'usinage des tranches de feuilles métalliques 3 défilant à grande vitesse, avec des outils de coupe et en procédant en plusieurs étapes. Un porte-outil amont 29 est pourvu de deux outils de coupe 31 et 33, un outil dégrossisseur 31 et un outil de finition 33, pour dresser le tranche de la feuille métallique 3. Un porte-outil aval 35 est pourvu de deux outils de chanfreinage, un outil dégrossisseur 37 et un outil de finition 39.

Avantageusement, les porte-outils 29 et 35 sont montés sur des guides 41, 43 de manière à pouvoir être déplacés perpendiculairement à l'axe de défilement de la bande 3, sur le bras pivotant 11.

Il est bien entendu que selon le matériau métallique à traiter et selon les autres conditions d'utilisation, il peut s'avérer avantageux d'utiliser plus de deux outils de dressage et/ou plus de deux outils de chanfreinage successifs.

Tout type d'outil connu en soi pour ce genre d'opération convient dans l'application concernée. On a constaté que pour réduire les frais d'entretien et d'arrêt de la machine, il est avantageux d'utiliser des outils de dressage à quatre tranchants qui permettent de remplacer un couteau par un autre par simple rotation de l'outil.

Selon une forme d'exécution préférée, l'embout de support du galet de dressage supérieur 25 est équipé d'un patin d'entrée 45 qui facilite le guidage de la feuille métallique défilante.

De préférence, le dispositif conforme à la présente invention est équipé d'un moyen d'évacuation des copeaux tel que des buses de soufflage d'air. On peut également prévoir des moyens pour la projection de lubrifiants ou d'agents réfigérants.

Selon une forme d'exécution particulièrement préférée de la présente invention, le support mobile est appuyé contre le bord de rive de la bande de feuille métallique, via les galets de guidage 15 et 17 à l'aide d'une force de pression comportant une composante active et une composante passive. Ladite force de pression exercée par un ressort 47 et par au moins un vérin 49. De préférence, la composante active est exercée par un vérin à suivre et un vérin de retrait.

Le présent mémoire descriptif est limité à la description d'un dispositif pour rectifier les bords de rive mais il est bien évident qui l'on peut disposer un dispositif du type susmentionné de part et d'autre de la bande de feuille métallique afin de rectifier simultanément et en continu les deux bords de rive de ladite bande quel que soit le déplacement transversal de cette bande.

Il est bien évident que la présente invention ne se limite pas au dispositif tel que décrit mais qu'elle s'étend au cadre défini par les revendications.

## Revendications

1. Dispositif pour rectifier en continu les bords de rive de feuilles métalliques (3) en bande en mouvement caractérisé en ce qu'il comporte un support fixe (5) monté sur un châssis réglable en hauteur et un support mobile (7) agencé de manière à pouvoir coulisser sur ledit support fixe (5) selon une direction essentiellement perpendiculaire à la direction de défilement de la bande de feuille métallique (3), en ce que le support mobile (7) comporte un bras (11) pivotant en son centre (13) sur un axe essentiellement vertical et comportant aux deux extrémités chaque fois un galet de guidage (15, 17) qui prend appui sur un même bord de rive d'une bande de feuille métallique (3), un galet de dressage inférieur (23) et un galet de dressage supérieur (25) entre lesquels est serrée et dressée la bande de feuille métallique (3) moyennant une force de pression réglable (27), un porte-outil amont (29) qui porte au moins en outil de coupe (31, 33) pour le dressage de la tranche de la bande de feuille métallique (3) et un porte-outil aval (35) qui porte au moins en outil de chanfreinage (37, 39) des arêtes supérieure et inférieure, le support mobile (7) étant appliqué contre le bord de rive de la bande de feuille métallique (3), via les galets de guidage (15, 17), moyennant une force de pression réglable (47, 49) qui prend appui sur le support fixe (5).

2. Dispositif selon la revendication 1 caractérisé en ce que les galets de guidage (15, 17) se trouvent respectivement en amont et en aval des porte-outils correspondants (35, 29), de telle sorte qu'un galet de guidage prend appui sur un bord de rive brut et l'autre galet de guidage prend appui sur un bord de rive rectifié.

3. Dispositif selon la revendication 1 ou 2 caractérisé en ce que la force de pression réglable qui applique le support mobile (7) via les galets de guidage (15, 17) contre le bord de rive comporte une composante active (49) et une composante passive (47).

4. Dispositif selon la revendication 3 caractérisé en ce que la composante active consiste en au moins un vérin (49), de préférence deux vérins, un vérin à suivre et un vérin de retrait, et en ce que la composante passive consiste en un ressort (47).

5. Dispositif selon l'une quelconque des revendications précédentes caractérisé en ce que les galets de guidage (15, 17) sont réglables en hauteur.

6. Dispositif selon l'une quelconque des revendications précédentes caractérisé en ce que le galet de dressage supérieur (25) est agencé de manière à pouvoir être écarté du galet de dressage inférieur (23).

7. Dispositif selon l'une quelconque des revendications précédentes caractérisé en ce que le porte-outil amont (29) est pourvu de deux outils de coupe, un outil dégrossiseur (31) et un outil de finition (33).

8. Dispositif selon l'une quelconque des revendications précédentes caractérisé en ce que le porte-outil aval (35) est pourvu de deux outils de chanfreinage, un outil dégrossisseur (37) et un outil de finition (39).

9. Dispositif selon l'une quelconque des revendications précédentes caractérisé en ce que les porte-outils (29, 35) sont montés sur des guides (41, 43) qui permettent un déplacement perpendiculaire à l'axe de défilement de la bande (3) sur ledit bras pivotant (11).

10. Dispositif selon l'une quelconque des revendications précédentes caractérisé en ce que l'embout de support du galet de dressage supérieur (25) est équipé d'un patin d'entrée (45).

11. Dispositif selon l'une quelconque des revendications précédentes caractérisé en ce qu'il est muni d'un moyen d'évacuation des copeaux, de préférence par soufflage d'air, et/ou d'un moyen de projection de lubrifiants.

12. Utilisation du dispositif conforme à l'une quelconque des revendications 1 à 11 pour le dressage et le chanfreinage en continu d'un bord de rive d'une bande de feuille métallique dans une installation de laminage ou de revêtement de feuille.

13. Utilisation selon la revendication 12 dans une installation comportant deux dispositifs conformes à l'une quelconque des revendications 1 à 11, montés l'un opposé à l'autre, de chaque côté de la bande de feuille métallique.

## Patentansprüche

1. Vorrichtung zur kontinuierlichen Bearbeitung der Kanten von laufenden Metallbändern (3), dadurch gekennzeichnet, daß sie eine feste Grundplatte (5) aufweist, die auf einem in der Höhe einstellbaren Chassis angebracht ist, und eine bewegliche Grundplatte (7) aufweist, die so angeordnet ist, daß sie auf der festen Grundplatte (5) in einer im wesentlichen zu der Laufrichtung des Metallbandes (3) senkrechten Richtung verschoben werden kann, daß die bewegliche Grundplatte (7) versehen ist mit einem Arm (11), der in seiner Mitte (13) um eine im wesentlichen vertikale Achse schwenkbar ist, und an den beiden Ende je eine Führungsrolle (15, 17) aufweist, die auf derselben Kante eines Metallbandes (3) aufliegt, einer unteren Richtrolle (23) und einer oberen Richtrolle (25, zwischen denen das Metallband (3) mittels einer einstellbaren Druckkraft (27) eingespannt und gerichtet wird, einem vorderen Werkzeughalter (29), der mindestens ein Schneidwerkzeug (31, 33) zum Bearbeiten der Schnittfläche des Metallbandes (3) trägt, und mit einem hinteren Werkzeughalter(35), der mindestens ein Werkzeug (37, 39) zum Abschrägen der oberen und unteren Kante trägt, wobei die bewegliche Grundplatte (7) durch eine einstellbare Druckkraft (47, 49), die sich auf der festen Grundplatte (5) abstützt, über die Führungsrollen (15, 17) gegen die Kante des Metallbandes (3) gedrückt wird.

2. Vorrichtung gemäß Anspruch 1, dadurch gekennzeichnet, daß die Führungsrollen (15, 17) vor bzw, hinter den entsprechenden Werkzeughaltern (35, 29) angeordnet sind, so daß eine Führungsrolle auf einer unbearbeiteten Kante, und die andere Führungsrolle auf einer bearbeiteten Kante aufliegt.

3. Vorrichtung gemäß Anspruch 1 oder 2, dadurch gekennzeichnet, daß die einstellbare Druckkraft, die die bewegliche Grundplatte (7) über die Führungsrollen (15, 17) gegen die Kante drückt, eine aktive Komponente (49) und eine passive Komponente (47) umfaßt.

4. Vorrichtung gemäß Anspruch 3, dadurch gekennzeichnet, daß die aktive Komponente aus mindestens einem Hubzylinder (49), vorzugsweise zwei Hubzylindern, und zwar einem Vorlauf- und einem Rücklaufhubzylinder besteht, und daß die passive Komponente aus einer Feder (47) besteht.

5. Vorrichtung gemäß irgendeinem der vorhergehenden Ansprüche, dadurch gekennzeichnet, daß die Führungsrollen (15, 17) in der Höhe einstellbar sind.

6. Vorrichtung gemäß irgendeinem der vorhergehenden Ansprüche, dadurch gekennzeichnet, daß die obere Richtrolle (25) so angeordnet ist, daß sie von der unteren Richtrolle (23) abgehoben werden kann.

7. Vorrichtung gemäß irgendeinem der vorhergehenden Ansprüche, dadurch gekennzeichnet, daß der vordere Werkzeughalter (29) mit zwei Schneidwerkzeugen, und zwar einem Grobbearbeitungswerkzeug (31) und einem Fertigbearbeitungswerkzeug (33) versehen ist.

8. Vorrichtung gemäß irgendeinem der vorhergehenden Ansprüche, dadurch gekennzeichnet, daß der hintere Werkzeughalter (35) mit zwei Abschrägungswerkzeugen, und zwar einem Grobbearbeitungswerkzeug (37) und einem Fertigbearbeitungswerkzeug (39) versehen ist.

9. Vorrichtung gemäß irgendeinem der vorhergehenden Ansprüche, dadurch gekennzeichnet, daß die Werkzeughalter (29, 35) auf Führungen (41, 43) angebracht sind, die eine zu der Laufachse des Metallbandes (3) senkrechte Verschiebung auf dem Schwenkarm (11) ermöglichen.

10. Vorrichtung gemäß irgendeinem der vorhergehenden Ansprüche, dadurch gekennzeichnet, daß das Halteansatzstück der oberen Richtrolle (25) mit einem Eingangsschuh (45) ausgerüstet ist.

11. Vorrichtung gemäß irgendeinem der vorhergehenden Ansprüche, dadurch gekennzeichnet, daß sie mit einem Mittel zur Abführung der Späne, vorzugsweise durch Luftblasen, und/oder einem Mittel zum Spritzen von Schmiermitteln ausgerüstet ist.

12. Verwendung der Vorrichtung gemäß irgendeinem der Ansprüche 1 bis 11 zum kontinuierlichen Bearbeiten und Abschrägen einer Kante eines Metallbandes in einer Anlage zum walzen oder Beschichten von Metallband.

13. Verwendung gemäß Anspruch 12 bei einer Anlage, die zwei Vorrichtungen gemäß irgendeinem der Ansprüche 1 bis 11 umfaßt, die einander gegenüber auf beiden Seiten des Metallbandes angebracht sind.

## Claims

1. Device for continuously grinding the edges of moving metal foils (3) in strip form, characterized in that it comprises a stationary support (5) mounted on a frame adjustable in height and a mobile support (7) arranged so as to be able to slide on said stationary support (5) in a direction essentially perpendicular to the direction of movement of the metal foil strip (3), in that the mobile support (7) comprises an arm (11) pivoting at its center (13) on an essentially vertical axis and comprising at each of the two ends a guiding roller (15, 17) which bears on one and the same edge of a metal foil strip (3), a lower dressing roller (23) and an upper dressing roller (25) between which the metal foil strip (3), is gripped and dressed with an adjustable pressure (27), an upstream tool holder (29) which carries at least one cutting tool (31, 33) for dressing the sheared edge of the metal foil strip (3) and a downstream tool holder (35) which carries at least one tool (37, 39) for chamfering the upper and lower edges, the mobile support (7) being brought into contact with the edge of the metal foil strip (3), via the guiding rollers (15, 17), with an adjustable pressure (47, 49) which bears on the stationary support (5).

2. Device according to claim 1, characterized in that the guiding rollers (15, 17) are located respectively upstream and downstream,of the corresponding tool holders (35, 29), so that one guiding roller bears on a rough edge and the other guiding roller bears on a ground edge.

3. Device according to claim 1 or 2, characterized in that the adjustable pressure which brings the mobile support (7) via the guiding rollers (15, 17) into contact with the edge comprises an active component (49) and a passive component (47).

4. Device according to claim 3, characterized in that the active component consists of at least one jack (49), preferably two jacks, a following jack and a withdrawing jack, and in that the passive component, consists of a spring (47).

5. Device according to any one of the preceding claims, characterized in that the guiding rollers (15, 17) are adjustable in height.

6. Device according to any one of the preceding claims, characterized in that the upper dressing roller (25) is arranged so that it can be separated from the lower dressing roller (23).

7. Device according to any one of the preceding claims, characterized in that the upstream tool holder (29) is provided with two cutting tools, a roughing tool (31) and a finishing tool (33).

8. Device according to any one of the preceding claims, characterized in that the downstream tool holder (35) is provided with two chamfering tools, a roughing tool (37) and a finishing tool (39).

9. Device according to any one of the preceding claims, characterized in that the tool holders (29, 35) are mounted on guides (41, 43) which permit a displacement perpendicular to the axis of movement of the strip (3) on said pivoting arm (11).

10. Device according to any one of the preceding claims, characterized in that the supporting end of the upper dressing roller (25) is equipped with an entrance shoe (45).

11. Device according to any one of the preceding claims, characterized in that it is provided with a chip-removal means, preferably by air blowing, and/or with a lubricant-projecting means.

12. Use of the device according to any one of claims 1 to 11 for continuously dressing and chamfering an edge of a metal foil strip in a rolling or foil-coating plant.

13. Use according to claim 12 in a plant comprising two devices according to any one of claims 1 to 11, mounted opposite one another, on each side of the metal foil strip.
